(19) Europäisches Patentamt
European Patent Office
Office européen des brevets

(11) **EP 3 403 150 B1**

(12) **EUROPÄISCHE PATENTSCHRIFT**

(45) Veröffentlichungstag und Bekanntmachung des Hinweises auf die Patenterteilung:
**12.05.2021  Patentblatt 2021/19**

(21) Anmeldenummer: **17700488.4**

(22) Anmeldetag: **04.01.2017**

(51) Int Cl.:
**G05B 19/4062** (2006.01)

(86) Internationale Anmeldenummer:
**PCT/EP2017/050152**

(87) Internationale Veröffentlichungsnummer:
**WO 2017/121671 (20.07.2017 Gazette 2017/29)**

(54) **VERFAHREN ZUM ÜBERWACHEN EINER WERKZEUGMASCHINE UND STEUERUNG**

METHOD FOR MONITORING A MACHINE TOOL, AND CONTROLLER

PROCÉDÉ DE CONTRÔLE D'UNE MACHINE-OUTIL ET COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2016  DE 102016100503**

(43) Veröffentlichungstag der Anmeldung:
**21.11.2018  Patentblatt 2018/47**

(73) Patentinhaber: **KOMET Deutschland GmbH
74354 Besigheim (DE)**

(72) Erfinder:
• **BRINKHAUS, Jan-Wilm
30916 Isernhagen (DE)**
• **IMIELA, Joachim
31559 Haste (DE)**

(74) Vertreter: **Gramm, Lins & Partner
Patent- und Rechtsanwälte PartGmbB
Theodor-Heuss-Straße 1
38122 Braunschweig (DE)**

(56) Entgegenhaltungen:
**WO-A2-03/050478      DE-B3-102009 025 167**

• **Jason W Osborne ET AL: "The power of outliers (and why researchers should ALWAYS check for them)", , 1. März 2004 (2004-03-01), Seiten 1-8, XP055346316, Gefunden im Internet: URL:http://pareonline.net/getvn.asp?v=9&n= 6 [gefunden am 2017-02-15]**
• **8 Jahrgang ET AL: "Prozesskontrolle in der Produktion", , 1. Januar 2007 (2007-01-01), Seiten 1-20, XP055346320, Gefunden im Internet: URL:http://www.phi-hannover.de/uploads/tx_ wwdownloads/phi-2-2007.pdf [gefunden am 2017-02-15]**

**Beschreibung**

Die Erfindung betrifft ein Verfahren zum Überwachen einer Werkzeugmaschine, insbesondere einer spanenden Werkzeugmaschine, gemäß dem Oberbegriff von Anspruch 1.

Gemäß einem zweiten Aspekt betrifft die Erfindung eine Steuerung für eine spanende Werkzeugmaschine, mit (a) einer Prozessgrößen-Erfassungsvorrichtung, die eingerichtet ist, zum Ermitteln von Prozessgrößen-Messwerten einer Prozessgröße in Abhängigkeit von einem Parameter, und (b) einer Recheneinheit, die einen digitalen Speicher umfasst.

Bei der spanenden Fertigung, beispielsweise beim Fräsen, ändern sich die Prozessparameter, beispielsweise das Drehmoment, das am Fräser anliegt, ständig. Wird ein Bearbeitungsverfahren mehrfach durchlaufen, weil mehrere gleichartige Bauteile gefertigt werden, so ergibt sich ein charakteristischer Verlauf der Bearbeitungsgröße über die Zeit. Ist der Bearbeitungsprozess gestört, beispielsweise weil ein Fräser gebrochen ist oder weil ein Werkstück fehlerhaft eingespannt wurde, entspricht der zeitliche Verlauf der Bearbeitungsgröße nicht mehr dem erwarteten Muster.

Aus der DE 10 2009 025 167 B3 ist ein gattungsgemäßes Verfahren bekannt, mittels dem Fehler im Bearbeitungsablauf anhand von Abweichungen von dem erwarteten zeitlichen Verlauf von der Bearbeitungsgröße erkannt werden können. Um auch bei Variationen der Werkstückgeometrie bei aufeinander folgenden Bearbeitungen die entstehenden Prozessgrößenverläufe miteinander vergleichen zu können, wird der Zeitpunkt des Eingriffs des Werkzeugs in das Werkstück berechnet. Dazu wird eine Kreuzkorrelation über die zwischen diesen Zeitpunkten liegenden Messwerte durchgeführt. So werden Zeitpunkte bezüglich einer Maschinenzeit bestimmt, bei denen das Werkzeug in das Werkstück eintaucht oder austritt. Nachteilig an einem solchen System ist, dass beispielsweise unerwartete Verzögerungen im Programmablauf zu Fehlalarmen führen können.

Aus dem Artikel "The power of outliers (and why researchers should ALWAYS check for them)" von _Jason W. Osborne et al, Practical Assessment, Research & Evaluation, Vol. 9, N. 6, März, 2004, ISSN 1531-7714 ist bekannt, dass es viele Gründe haben kann, warum in Datensätzen Ausreißer entstehen. Es wird zudem diskutiert, welche Bedeutung diese haben können und was dies für die entsprechende Auswertung bedeutet.

Aus dem Artikel "Mehr Intelligenz für Werkzeugmaschinen" von J. Brinkhaus, Phi Produktionstechnik Hannover informiert, ISSN 1616-2757 ist bekannt, durch statistische Auswertungen der zur Verfügung stehenden Sensordaten eine Wahrscheinlichkeit dafür zu berechnen, dass ein Bearbeitungsprozess zum entsprechend jeweiligen Zeitpunkt fehlerfrei verläuft. Überschreitet die berechnete Wahrscheinlichkeit eine vordefinierte Grenze, wird die Werkzeugmaschine gestoppt. Auch bei einem derartigen Verfahren ist es nachteilig, dass eine Veränderung der Abarbeitungsgeschwindigkeit eines Bearbeitungsprogramms mit hoher Wahrscheinlichkeit zu einer Fehlermeldung führt.

Verfahren zum Überwachen von Werkzeugmaschinen werden automatisch durchgeführt, entweder von der Maschinensteuerung selbst oder von einer externen Recheneinheit. Das Programm, auf Basis dessen das Verfahren durchgeführt wird, muss in der Regel an eine neu zu überwachende Werkzeugmaschine angepasst werden. Der Grund dafür ist, dass sich Werkzeugmaschinen in der Zahl der Achsen, der verwendeten Werkzeuge und ihrem sonstigen Aufbau unterscheiden.

Nachteilig an bekannten Verfahren zur Überwachung von Werkzeugmaschinen ist, dass sie zu Fehlalarmen neigen können. Werden die Kriterien für einen Alarm so verändert, dass Fehlalarme seltener auftreten, können real fehlerhafte Bearbeitungsprozesse nicht mehr mit der gleichen Wahrscheinlichkeit und/oder der gleich geringen Verzögerungszeit erkannt werden.

Aus der DE 60 2005 003 194 T2 ist ein Regler zum Regeln einer Werkzeugmaschine bekannt, der lernend ausgebildet ist. Der Regler besitzt eine Beschleunigungsermittlungsvorrichtung, mittels der die Position beispielsweise des Werkzeugs bestimmt wird, wobei die so ermittelte Position zur Ansteuerung der Werkzeugmaschine verwendet wird. Das ist dann vorteilhaft, wenn die Werkzeugmaschine nicht als beliebig steif angesehen werden kann, da in diesem Fall die von der Werkzeugmaschine anhand der Antriebe bestimmte Position nicht mit der tatsächlichen Position des Werkzeugs übereinstimmen muss.

Aus der EP 1 455 983 B1 ist ein Verfahren zur Erfassung und Auswertung von Prozessdaten bekannt, bei denen Messwerte in Abhängigkeit von der Laufvariable erfasst und aus mehreren Messwertverläufen ein Streuband der Messwerte ermittelt wird. Bei einem derartigen Verfahren kann es zu dem oben geschilderten Problem kommen, dass Mittelwerte über Messkräfte gebildet werden, die zu unterschiedlichen Zeitpunkten in Bearbeitungsablauf aufgenommen wurden. Das wiederum erhöht entweder die Gefahr von Fehlalarm oder vermindert die Empfindlichkeit des Überwachungsverfahrens.

Der Erfindung liegt die Aufgabe zugrunde, die Überwachung von Werkzeugmaschinen zu verbessern.

Die Erfindung löst das Problem durch ein Verfahren mit den Merkmalen von Anspruch 1. Die Erfindung löst das Problem zudem durch eine gattungsgemäße Steuerung, die zum Ausführen eines entsprechenden Verfahrens ausgebildet ist.

Vorteilhaft an der erfindungsgemäßen Lösung ist, dass die Zahl der Fehlalarme reduziert werden kann, ohne dass die Erkennwahrscheinlichkeit und/oder -geschwindigkeit negativ beeinflusst wird. Es hat sich nämlich herausgestellt, dass Fehlalarme häufig dadurch hervorgerufen werden, dass der Bearbeitungsprozess von der Maschinensteuerung kurzfristig angehalten wird, beispielsweise weil länger als vom Programmierer erwartet auf das Bereitstellen eines hinreichend hohen Kühlschmierstoffdrucks gewartet werden muss, oder weil der Programmablauf bewusst verzögert wird.

Bei bekannten Überwachungsverfahren wird als Parameter die reale Zeit verwendet. Kommt es zu einer solchen Verzögerung, steigt beispielsweise das an einem Fräser anliegende Drehmoment später an, was als Fräserbruch interpretiert werden kann. Da im Rahmen der vorliegenden Erfindung ein Parameter verwendet wird, der stets den Fortschritt des Bearbeitungsprozesses charakterisiert, kann dieser Fall nicht eintreten. Kommt es zu einer Verzögerung, nimmt auch der Parameter nicht weiter zu.

Im Rahmen der vorliegenden Beschreibung ist der Parameter insbesondere so gewählt, dass er als das Argument der Werkzeug-Trajektorie beschreibbar ist. Die Werkzeug-Trajektorie ist diejenige parametrisierte Kurve, entlang der sich das Werkzeug bewegt. Die Laufvariable könnte auch als Eigenzeit des Bearbeitungsprozesses bezeichnet werden. Im theoretischen, idealisierten Fall können wiederholende Bearbeitungsprozesse vollständig gleich ablaufen, so dass die reale Zeit, die von einem Startzeitpunkt des Bearbeitungsprozesses aus gemessen wird, in der Regel als Parameter verwendet wurde. Das hat aber die oben aufgeführten Nachteile.

Unter einem Prozessgrößen-Messwert wird insbesondere ein Messwert verstanden, der eine Prozessgröße des Bearbeitungsprozesses der Werkzeugmaschine charakterisiert. Es ist möglich, nicht aber notwendig, dass der Prozessgrößen-Messwert eindimensional ist, es ist beispielsweise auch möglich, dass der Prozessgrößen-Messwert ein Vektor, eine Matrix oder eine Menge ist.

Unter dem Ermitteln von Prozessgrößen-Messwerten einer Prozessgröße wird insbesondere das Erfassen von Daten verstanden, die eine Prozessgröße beschreiben. Beispielsweise werden Prozessgrößen-Messwerte dadurch ermittelt, dass auf diese bezogene Daten aus der Maschinensteuerung ausgelesen werden. Beispielsweise ist die Prozessgröße ein Drehmoment, das beispielsweise an einer Spindel anliegt, mit der das Werkzeug angetrieben wird. Bei dem Werkzeug handelt es sich beispielsweise um fahrendes Werkzeug wie ein Fräser oder ein Bohrer. Beispielsweise wird das Drehmoment der Spindel aus deren Drehzahl und der momentanen Motorleistung bestimmt.

Unter dem Merkmal, dass ermittelt wird, ob die Prozessgrößen-Messwerte in dem vorgegebenen Toleranz-Intervall liegen, wird insbesondere verstanden, dass überprüft wird, ob der Verlauf der Prozessgrößen-Messwerte in einem Toleranzband liegt. Das Toleranzband ist die Folge aller Toleranz-Intervalle. In anderen Worten ist das Toleranzband ein flächiges Objekt, wohingegen das Toleranz-Intervall ein linienförmiges Objekt ist.

Unter dem Merkmal, das verneinendenfalls ein Warnsignal ausgegeben wird, wird insbesondere auch verstanden, dass bejahendenfalls kein Warnsignal ausgegeben wird.

In anderen Worten wird in dem Normalfall, dass die Prozessgrößen-Messwerte im vorgegebenen Toleranz-Intervall liegen, kein Warnsignal ausgegeben.

Unter dem Merkmal, dass der Parameter stets den Fortschritt des Bearbeitungsprozesses charakterisiert, wird insbesondere verstanden, dass sich der Parameter dann und nur dann ändert, wenn der Bearbeitungsprozess fortschreitet.

Das Verfahren umfasst den Schritt des Berechnens der Laufvariablen aus der realen Zeit und zumindest einem Ablaufparameter, der die Abarbeitungsgeschwindigkeit des Bearbeitungsprozesses charakterisiert. Der Ablaufparameter ist dabei eine Eingangsgröße. In anderen Worten wird der Ablaufparameter nicht im Rahmen des Verfahrens berechnet. Vielmehr wird der Ablaufparameter von extern erfasst. Beispielsweise wird der Ablaufparameter von der Maschinensteuerung ausgelesen, die auf Basis des der Steuerung zugrundeliegenden Algorithmus den Bearbeitungsprozess verlangsamen, beschleunigen oder anhalten kann.

Besonders günstig ist es, wenn der zumindest eine Ablaufparameter ein momentaner Gesamtgeschwindigkeitswert ist. Der Gesamtgeschwindigkeitswert kann auch als Overridewert bezeichnet werden, da der Gesamtgeschwindigkeitsregler oft als Overrideregler bezeichnet wird. Mit einem Gesamtgeschwindigkeitsregler kann die Abarbeitungsgeschwindigkeit des Bearbeitungsprogramms und damit die Geschwindigkeit des Bearbeitungsprozesses direkt beeinflusst werden. Ein Gesamtgeschwindigkeitswert von 1 oder 100% entspricht der im Bearbeitungsprogramm vorgegebenen Geschwindigkeit. Das Bearbeitungsprogramm ist diejenige Abfolge von Befehlen, die die Bearbeitung des Werkstücks kodiert. Beispielsweise handelt es sich um ein NC-Programm.

Der Gesamtgeschwindigkeitswert ist derjenige Wert, der die resultierende Abarbeitungsgeschwindigkeit bezogen auf die im Bearbeitungsprogramm festgelegte Geschwindigkeit beschreibt. Es ist möglich, dass mehrere Teil-Geschwindigkeitsregler existieren. In diesen ist nur deren Gesamtwirkung relevant.

Wird der Gesamtgeschwindigkeitsregler beispielsweise auf 110% gestellt, so bewegt sich das Werkzeug, beispielsweise der Fräser, 10% schneller als bei einer Einstellung von 100%. Es ist möglich, in aller Regel aber nicht vorgesehen, dass der Gesamtgeschwindigkeitsregler auch die Drehzahl etwaig von der Spindel zum Antreiben eines Werkzeugs beeinflusst. Beispielsweise kann daher als Laufvariable derjenige Wert der realen Zeit verwendet werden, der die Position des Werkzeugs charakterisiert, wenn der Gesamtgeschwindigkeitsregler auf 100% steht und es zu keinerlei Stillstandszeiten kommt.

Wird der Gesamtgeschwindigkeitswert zum Berechnen der Laufvariablen verwendet, so geschieht es vorzugsweise dadurch, dass numerisch das Integral über den momentanen Gesamtgeschwindigkeitswert berechnet wird. Numerisch wird dieses Integral dadurch dargestellt, dass die Summe über Produkte gebildet wird, wonach ein Faktor das Zeitintervall ist und der zweite Faktor der momentane Gesamtgeschwindigkeitswert im Zeitintervall ist. Beim Grenzübergang für beliebig kleine Zeitintervalle ergibt sich dann das Integral über den Gesamtgeschwindigkeitswert. Es sei darauf hingewiesen, dass die so definierte Laufvariable ebenfalls die Dimension Sekunde hat.

In seiner bevorzugten Ausführungsform umfasst der zumindest eine Ablaufparameter eine Stillstandszeit, die ein Stillstehen des Bearbeitungsprozesses charakterisiert. Viele Steuerungen von Werkzeugmaschinen sind so ausgebildet, dass sie den Bearbeitungsprozess anhalten, wenn vorgegebene Schwellenwerte nicht erreicht werden, beispielsweise Kühlschmierstoffdruck oder Spindeldrehzahl, und/oder eine Achsfreigabe nicht vorliegt. Diese Stillstandszeit wird im Programm unabhängig vom Overridewert geführt. Während der Stillstandszeit schreitet der Bearbeitungsprozess nicht fort und entsprechend verändert sich auch nicht die Laufvariable.

Vorzugsweise umfasst der Schritt des Ermittelns, ob die Prozessgrößen-Messwerte in dem vorgegebenen Toleranz-Intervall liegen, die folgenden Schritte: (b1) für eine Laufvariable, zu der ein Prozessgrößen-Messwert ermittelt wurde, Bestimmen einer Zeit-Umgebung um diese Laufvariable, (b2) Ermitteln zumindest einer Referenz-Laufvariablen aus der Zeit-Umgebung, für die zumindest ein Referenz-Prozessgrößen-Messwert existiert, der in einem vorhergegangenen, gleichen Bearbeitungsprozess aufgenommen wurde, und (b3) Berechnen des Toleranz-Intervalls aus dem zumindest einen Referenz-Prozessgrößen-Messwert. Diesem Vorgehen liegt die Erkenntnis zugrunde, dass beim Abarbeiten eines Bearbeitungsprozesses, beispielsweise anhand eines CNC-Programms, nur im theoretischen Idealfall zu jeweils gleichen Werten für die Laufvariablen die Prozessgrößen-Messwerte aufgenommen werden.

Da es in jedem realen Ablauf des Bearbeitungsprozesses zu Verzögerungen kommt und diese zudem durch die Laufvariable nur im Rahmen der numerischen Genauigkeit charakterisiert werden kann, kann es vorkommen, dass zu einem bestimmten Wert für die Laufvariable kein Referenz-Prozessgrößen-Messwert existiert, wohl aber für eine Laufvariable, die nur einen kleinen Abstand von deren betreffenden Wert für die Laufvariable hat. Es wird daher für einen vorgegebenen Wert der Laufvariablen in der Zeit-Umgebung um diesen Wert der Laufvariablen nach Referenz-Laufvariablen gesucht, für die ein Referenz-Prozessgrößen-Messwert existiert.

Selbstverständlich darf die Zeit-Umgebung nicht zu groß gewählt sein, da ansonsten das Toleranz-Intervall zu groß berechnet wird. Günstig ist es, wenn das Zeitintervall kleiner ist als 0,5 sec.

Vorzugsweise wird das Toleranz-Intervall anhand eines Maximums und eines Minimums über die Referenz-Prozessgrößen-Messwerte ($B_{ref}(i_{ref})$) berechnet. Hierunter wird insbesondere verstanden, dass die Intervallgrenzen anhand einer Formel berechnet werden, die das Maximum und das Minimum enthalten. Es ist möglich, nicht aber notwendig, dass die Formel weitere Größen enthält, beispielsweise ein Streuungsmaß.

Alternativ wird das Toleranz-Intervall aus einem Mittelwert und einem Streuungsmaß von zumindest zwei Referenz-Prozessgrößen-Messwerten berechnet. Bei dem Mittelwert kann es sich beispielsweise um den arithmetischen Mittelwert handeln. Alternativ kann der Mittelwert auch ein gestutztes Mittel, ein winsorisierter Mittelwert, ein Quartilsmittel, ein Gastwirth-Cohen-Mittelwert, ein Bereichsmittel oder ein ähnlicher Mittelwert sein. Das Streuungsmaß kann die Varianz oder die Standardabweichung sein. Es ist aber auch möglich, dass beispielsweise eine gekappte Varianz oder eine gekappte Standardabweichung verwendet wird.

Gemäß einer bevorzugten Ausführungsform umfasst das Verfahren die Schritte eines Erfassens eines Endes einer Positionierbewegung und/oder eines Beginns einer Vorschubbewegung und des Setzens der Laufvariablen auf einen vorgegebenen Wert, wenn das Ende der Positionierbewegung und/oder der Beginn der Vorschubbewegung erfasst wurden. In einem Programm, insbesondere einem CNC-Programm, das einen Bearbeitungsprozess kodiert, lassen sich in den meisten Fällen Positionierbewegungen und Vorschubbewegungen voneinander unterscheiden. Das Ziel einer Positionierbewegung ist es, das Werkzeug auf eine vorgegebene Position zu bringen, ohne dass dieses im eingeführten Werkstück ist. Positionierbewegungen werden in aller Regel mit möglichst hoher Achsgeschwindigkeit durchgeführt, um die Bearbeitungszeit möglichst klein zu halten.

Eine Vorschubbewegung hingegen wird nur mit einer so hohen Geschwindigkeit ausgeführt, dass das Werkzeug und/oder das Werkstück nicht überlastet werden. Während der Vorschubbewegung ist das Werkzeug im Eingriff oder bewegt sich vor oder nach dem Eingriff in das Werkstück mit der gleichen Geschwindigkeit wie beim Eingriff. Da beim Berechnen der Laufvariablen numerische Fehler auftreten können, ist es vorteilhaft, die Laufvariable auf einen vorher festgelegten Wert zu setzen, wenn ein einfach zu identifizierender Zeitpunkt im Bearbeitungsprozess erreicht ist. Dazu ist das Ende einer Positionierbewegung oder der Beginn einer Vorschubbewegung gut geeignet.

In einer erfindungsgemäßen Steuerung ist vorzugsweise ein Kaskadenregler implementiert. Unter einem Kaskadenregler wird ein Regler verstanden, der mehrere Regelkreise aufweist, wobei der jeweils übergeordnete Regler dem nachgeordneten Regler den Soll-Wert vorgibt. Beispielsweise kann der Regler der höchsten Hierarchiestufe ein Positionsregler sein, der eine Soll-Position des Werkzeugs regelt. Abweichungen zwischen Soll- und Ist-Positionen und die zum Ausregeln zur Verfügung stehende Zeit führen zu einer Soll-Geschwindigkeit, die ein hierarchisch nachgeordneter Geschwindigkeitsregler regelt.

Diesem kann ein Drehmomentregler nachgeschaltet sein, der auch das Soll-Drehmoment regelt, der aus der Differenz zwischen Soll-Geschwindigkeit und Ist-Geschwindigkeit resultiert. Dem kann wiederum ein Stromregler nachgeschaltet sein, der wiederum einen Spannungsregler treibt. Je tiefer die Hierarchieebene ist, desto höher ist die Frequenz mit der der Regler arbeitet. Beispielsweise hat der Positionsregler eine Frequenz zwischen 50 und 500 Hz, wohingegen der Stromregler bereits eine Frequenz zwischen 5 und 15 kHz haben kann. Der Kaskadenregler wird vorzugsweise von einem NC-Programm angesteuert, das in dem digitalen Speicher abgelegt ist und den Bearbeitungsprozess kodiert.

Im Folgenden wird die Erfindung anhand der beigefügten Zeichnungen näher erläutert. Dabei zeigen:

Figur 1    eine schematische Ansicht einer erfindungsgemäßen Werkzeugmaschine zum Durchführen eines erfindungsgemäßen Verfahrens,

Figur 2    einen Prozessgrößenverlauf,

Figur 3    eine schematische Ansicht von drei unterschiedlichen Prozessgrößenverläufen, die zu unterschiedlichen Wiederholungsindizes gehört,

Figur 4    eine Veranschaulichung der Messwert-Menge und

Figur 5    den Erwartungswertverlauf des Bearbeitungsprozesses.

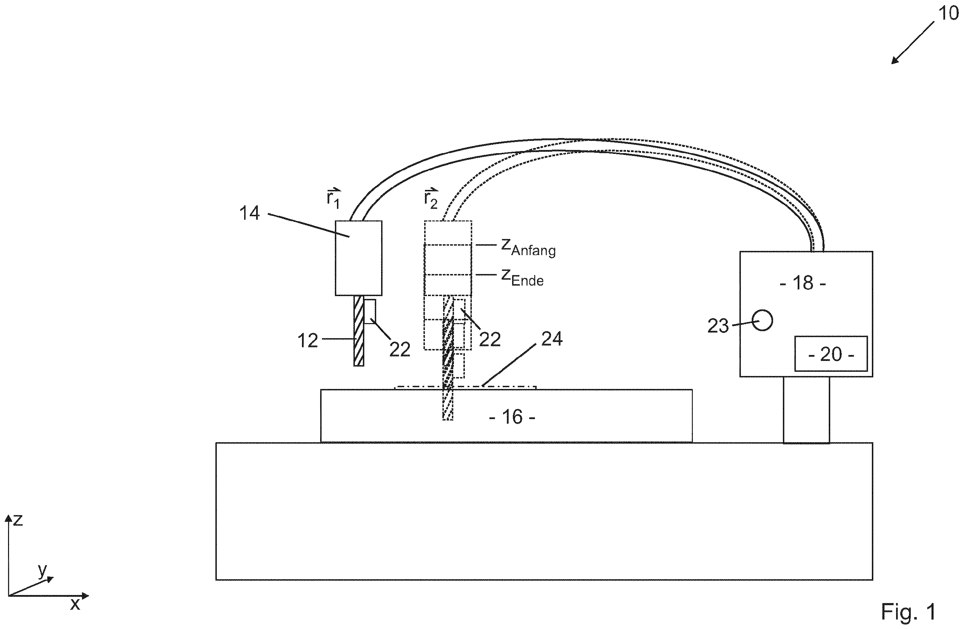

Figur 1 zeigt schematisch eine Werkzeugmaschine 10 mit einem Werkzeug 12 in Form eines Bohrers. Das Werkzeug 12 ist von einer schematisch eingezeichneten Spindel 14 angetrieben. Auf der Werkzeugmaschine 10 ist ein Werkstück 16 gespannt, das im Rahmen eines Bearbeitungsprozesses von dem Werkzeug 12 zerspant wird.

Die Spindel 14 und damit das Werkzeug 12 können in drei Raumkoordinaten, nämlich in x-Richtung, y-Richtung und z-Richtung positioniert werden. Die entsprechenden Antriebe werden von einer elektrischen Steuerung 18 angesteuert, die einen digitalen Speicher 20 umfasst. In dem digitalen Speicher 20 ist ein CNC-Programm abgelegt. In dem digitalen Speicher 20 oder einem davon räumlich getrennten digitalen Speicher ist zudem ein Programm zum Durchführen eines erfindungsgemäßen Verfahrens abgelegt.

Die Werkzeugmaschine kann zudem einen schematisch eingezeichneten Sensor 22, beispielsweise einen Kraftsensor oder einen Beschleunigungssensor aufweisen, der die Beschleunigung des Werkzeugs 12 oder der Spindel 18 oder einer anderen Komponente oder einer auf eine solche Komponente wirkende Kraft misst.

Zum Durchführen eines Bearbeitungsprozesses arbeitet die Steuerung 18 das im digitalen Speicher 20 abgelegte CNC-Programm ab. In diesem Programm sind mit dem Werkzeug 12 anzufahrende Positionen und Geschwindigkeiten für dessen Bewegung abgelegt. Die Steuerung 18 berechnet daraus eine Trajektorie $\vec{r}(i) = (x, y, z)(n)$ in Abhängigkeit von einem Programmschrittzähler n ab einem vorgegebenen Startzeitpunkt. Am Ende des Programms fährt die Steuerung 18 das Werkzeug 12 auf den Ausgangspunkt zurück. Jeweils zum Start eines derartigen Bearbeitungsprozesses wird der Programmschrittzähler zurückgesetzt, beispielsweise auf den Wert n = 0.

Am Ende des Bearbeitungsprozesses wird das Werkstück 16 entfernt und durch ein neues, gleiches Werkstück ersetzt, so dass der gleiche Bearbeitungsprozess erneut durchfahren wird. Nachfolgend wird der Prozess betrachtet, indem zwei Löcher in das Werkstück 16 eingebracht werden. Die Position, in der das zweite Loch angebracht wird, ist durch das gestrichelt eingezeichnete Werkzeug nebst Spindel dargestellt.

Ein Bearbeitungsprozess umfasst in diesem Fall das Positionieren des Werkzeugs 12 an der ersten Position $\vec{r}_1 = (x_1, y_1, z_1)$, eines Bohrens des Lochs, eines Herausfahrens des Werkzeugs 12 aus dem Werkstück 16, eines Positionierens auf der zweiten Position $\vec{r}2 = (x_2, y_2, z_2)$, eines Bohrens des zweiten Lochs, eines Herausfahrens des Werkzeugs 12 aus dem Werkstück 16 und eines Zurückfahrens in die Ausgangsposition.

Während dieses Bearbeitungsprozesses wird wiederholend ein Antriebsdrehmoment $M_A$, das die Spindel 14 auf das Werkzeug 12 aufbringt, von der Steuerung 18 erfasst. Alternativ ist eine von der Steuerung 18 unabhängige Recheneinheit vorhanden, die das Antriebsdrehmoment $M_A$ aus der Steuerung 18 ausliest.

Von jeder Position $\vec{r}_1, \vec{r}2$ aus wird das Werkzeug 12 in das Werkstück 16 gefahren. Dabei hat die Position, an der das Werkzeug 12 das Werkstück 16 zuerst berührt, die z-Koordinate $z_{Anfang}$ und die Position, bei der das Werkzeug 12 maximal tief ins Werkstück 16 eingreift hat die z-Koordinate $z_{Ende}$. Die Positionen unterscheiden sich bei jeder Bohrung, weil die x-Koordinaten verschieden sind, abgesehen von etwaigen Dickenunterschieden des Werkstücks 15 sind aber die jeweiligen z-Koordinaten die gleichen.

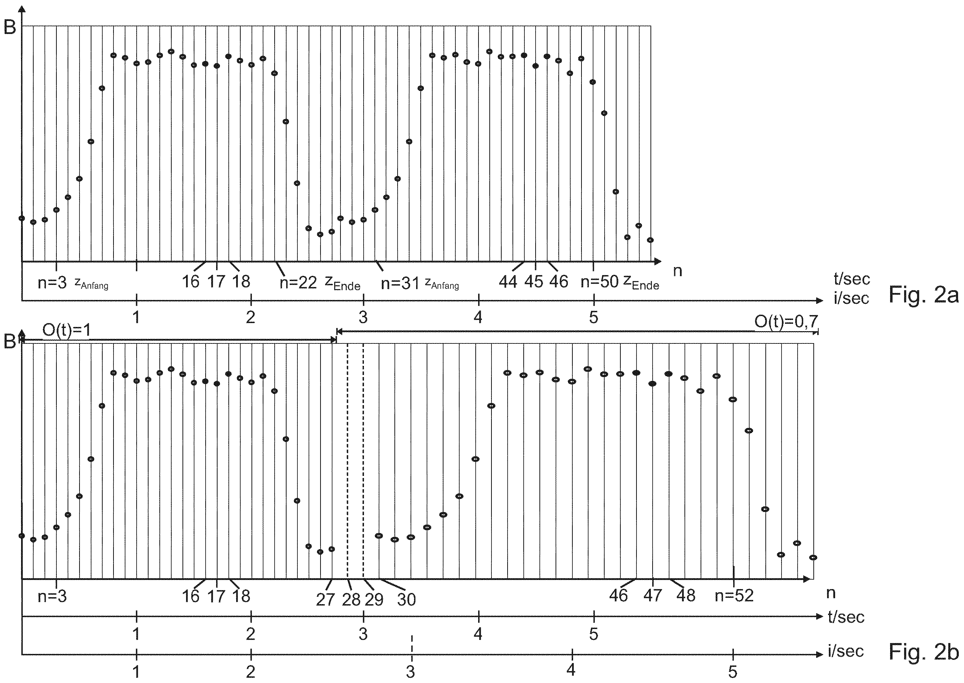

Figur 2a zeigt schematisch den Prozessgrößenverlauf $B_1(n) = M_A(n)$ für einen idealen Bearbeitungsprozess. Dieser Prozessgrößenverlauf trägt das ermittelte Antriebsdrehmoment $M_A$ gegen den Programmschrittzähler n auf. Im idealen Fall entspricht der Fortschritt um einen Programmschrittzähler stets dem gleichen Zeitintervall $\Delta t$. Es ist zu erkennen, dass bei n =3 sec die Prozessgröße $M_A$ anzusteigen beginnt. Das ist der Zeitpunkt, zu dem der Bohrer 12 in Eingriff mit dem Werkstück 16 kommt. Es gilt also z = $z_{Anfang}$. In Figur 2a entspricht ein Programmschrittzähler n einem Zeitintervall der realen Zeit von 0,1 sec (sec=Sekunden).

Am Ende des Bohrvorgangs wird der Bohrer 12 aus dem gebohrten Loch herausgezogen, das Antriebsdrehmoment $M_A$ fällt, wenn z = $z_{Ende}$ gilt. Danach wird der Bohrer 12 neu positioniert und ein weiteres Loch gebohrt, wobei das Antriebsdrehmoment $M_A$ ab t = 30 sec wieder steigt, wenn z = $z_{Anfang}$ gilt.

Figur 2b zeigt den Fall, in dem beim ersten Loch der Bearbeitungsprozess ideal abläuft. Nach Bearbeiten des ersten Lochs kommt es jedoch zu einer Stillstandszeit $\Delta t_{still}$, die zwei Programmschrittzähler lang dauert. Zudem wird nach dem ersten Loch ein Gesamtgeschwindigkeitsregler oder Overrideregler 23 (siehe Figur 1) betätigt, der die Gesamtgeschwindigkeit, die auch als Abarbeitungsgeschwindigkeit oder Ablaufgeschwindigkeit bezeichnet werden könnte, auf 70% der ursprünglichen Geschwindigkeit herabsetzt. Das kann beispielsweise erfolgt sein, um den Werkzeugverschleiß zu verringern.

Beides führt dazu, dass beispielsweise zum Zeitpunkt t = 4 sec beim zweiten Durchlauf eine Prozessgröße $B_1$ = $M_A$ = deutlich kleiner ist als zum Zeitpunkt t = 4 sec beim ersten Durchlauf.

Figur 2b zeigt neben der Zeitskala der realen Zeit t eine Skala mit einer Laufvariablen i, die selbstverständlich nicht der imaginären Einheit entspricht. Die Laufvariable i ist im idealisierten Fall eine reelle Zahl. Die Laufvariable i wird in der vorliegenden Ausführungsform berechnet als

$$i(t) = \int_{t'=t_0}^{t'=t} O(t')dt' - \sum \Delta t_{still} \qquad \text{Formel 1}$$

In anderen Worten führen Stillstandszeiten des Bearbeitungsprozesses auch zu einem Stillstand der Laufvariablen i. Ist der Gesamtgeschwindigkeitswert O kleiner als 1, so wird die reale Zeit t gewichtet aufintegriert.

Es sei hinzugefügt, dass die Laufvariable i sich selbstverständlich auch beispielsweise dadurch berechnen lässt, dass der Gesamtgeschwindigkeitswert O (nur) in Stillstandszeiten bei der Berechnung des Integrals auf null gesetzt wird. Es sind auch andere Berechnungsarten möglich, für die aber jeweils gilt, dass Stillstandszeiten nicht dazu führen, dass die Laufvariable i größer wird.

Es ist zu erkennen, dass die Laufvariable i die Dimension Zeit hat. Im idealisierten, aber nicht realen Fall, also ohne Stillstandszeiten und stets unveränderter Abarbeitungsgeschwindigkeit gilt i(t) = t + to, wobei $t_0$ der jeweilige Startzeitpunkt des Bearbeitungsprozesses ist.

Verlaufen zwei Bearbeitungsvorgänge jeweils störungsfrei, so ist das Werkzeug bis auf numerische Fehler für jeden Wert der Laufvariablen i relativ zum Werkstück an der gleichen Stelle, auch wenn es zu Stillstandszeiten oder einer Veränderung der Abarbeitungsgeschwindigkeit kommt. Numerisch wird Formel 1 durch eine Summe dargestellt.

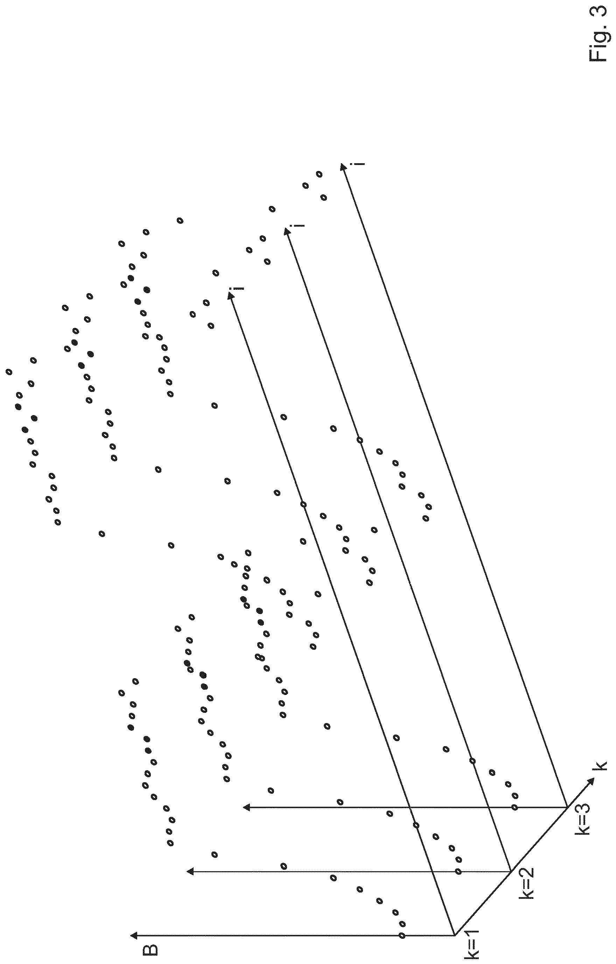

Die Figur 3 zeigt drei Verläufe von Prozessgrößen-Messwerten, nämlich $B_1(i)$, $B_2(i)$ und $B_3(i)$, wobei der tiefgestellte Index der Wiederholungsindex k ist. Jedes Mal, wenn das Werkzeug 12 ein neues Werkstück 16 bearbeitet, wird der Wiederholungsindex k um eins erhöht. Es wird so ein durchnummerierter Satz aus Prozessgrößenverläufen $B_k(i) = M_k(i)$ erhalten. Der aktuelle Bearbeitungsprozess sei der mit dem Wiederholungsindex k = 3.

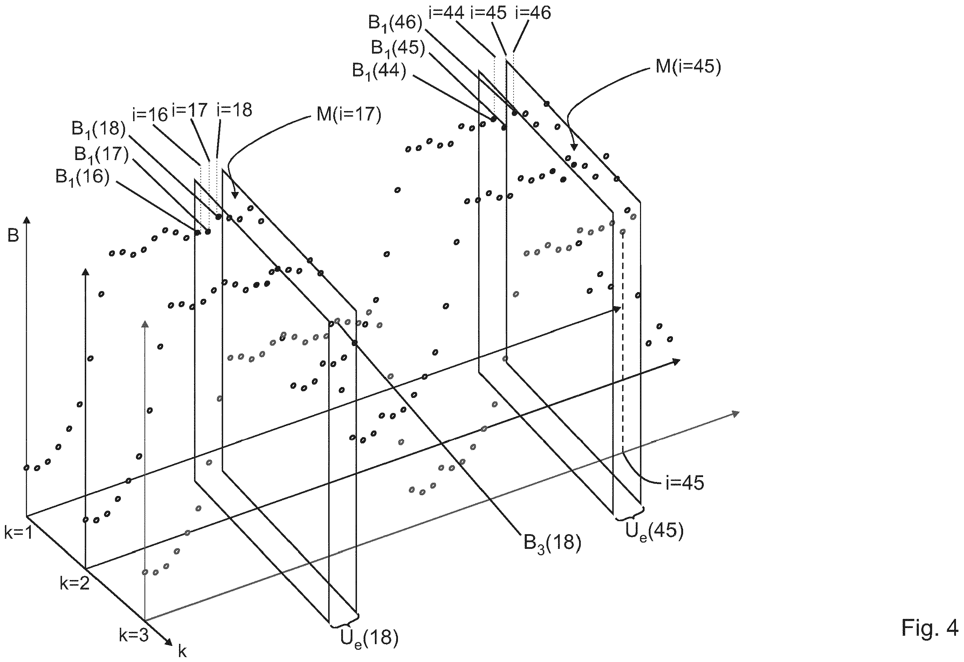

Figur 4 zeigt zwei Verläufe von Prozessgrößen-Messwerten für k=1 und k=2. Der Bearbeitungsprozess mit dem Wiederholungsindex k = 3 ist fast abgeschlossen, der letzte erfasste Prozessgrößen-Messwert ist (B(45)) für die Laufvariable i=45.

Zum Ermitteln, ob die Prozessgrößen-Messwerte (B(i=45)) in einem vorgegebenen Toleranz-Intervall T(i=45) liegen, wird zunächst eine Zeit-Umgebung $U_e(45)$ bestimmt, wobei die Größe e der Umgebung beispielsweise so gewählt ist, dass das Werkzeug während des Zeitraums, der durch die Umgebung beschrieben wird, einen vorgegebenen Weg zurückgelegt hat, wobei dieser Weg vorzugsweise zumindest 500 $\mu$m und höchstens 5000 $\mu$m beträgt. Im Beispiel ist e = i, sodass alle Prozessgrößen-Messwerte $B_k(44)$, $B_k(45)$ und $B_k(46)$ für k=1 und k=2 in $U_1(45)$ liegen. Dass alle i im vorliegenden Beispiel ganze Zahlen sind, dient der Vereinfachung, im realen Fall müssen die i keine ganzen Zahlen sein.

Aus den Referenz-Prozessgrößen-Messwerten $B_1(44)$, $B_1(45)$ $B_1(46)$, $B_2(44)$, $B_2(45)$ und $B_2(46)$ werden der Erwartungswert E(45) als Mittelwert und die Varianz $\sigma^2(45)$ als Streuungsmaß berechnet und daraus das Toleranz-Intervall T(45) = { E(45) - $\sigma^2(45)$; E(45) + $\sigma^2(45)$ }. Diese Berechnung wird für alle i des aktuellen Bearbeitungsprozesses durchgeführt. In Figur 4 ist die Berechnung zudem für i = 18 gezeigt.

Es ist möglich, nicht aber notwendig, dass nicht alle $B_k(i)$, die in der Zeit-Umgebung $U_e(i)$ liegen, zur Berechnung des Toleranz-Intervalls herangezogen werden. Bei einer großen Zahl an Wiederholungen kann es sinnvoll sein, dass die Wiederholungs-Menge beispielsweise die letzten zwanzig Wiederholungsindices enthält, um die Berechnung klein zu halten.

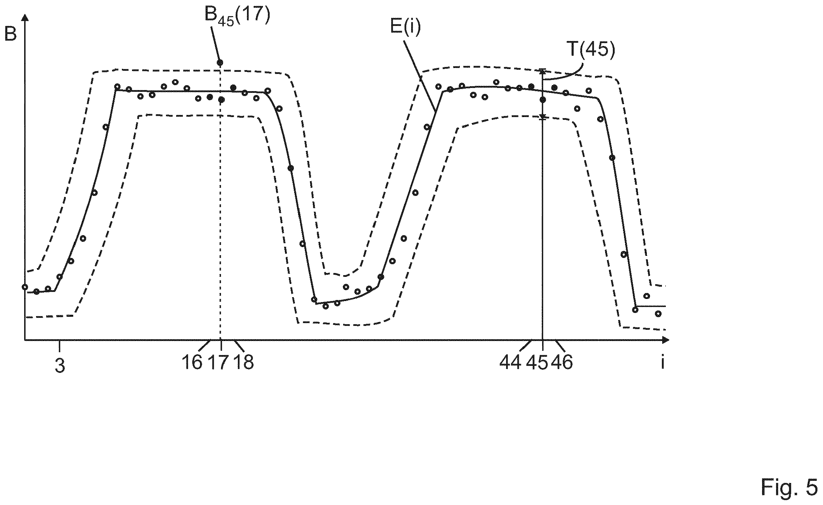

Figur 5 zeigt den Erwartungswertverlauf E(i) nach einer Vielzahl von Gut-Bearbeitungsprozessen, also solchen Bearbeitungsprozessen, die fehlerfrei abgearbeitet wurden. In Figur 5 ist zudem rein schematisch das Toleranz-Intervall T(45) dargestellt. Die Fläche zwischen den gestrichelten Kurven ist das Toleranzband.

**Bezugszeichenliste**

| | |
|---|---|
| 10 | Werkzeugmaschine |
| 12 | Werkzeug |
| 14 | Spindel |
| 16 | Werkstück |
| 18 | Steuerung |

| | |
|---|---|
| 20 | digitaler Speicher |
| 22 | Sensor |
| 24 | Aufmaßschwankung |

| | |
|---|---|
| $\vec{r}(i)$ | Trajektorie |
| i | Laufvariable |
| $M_A$ | Antriebsdrehmoment |
| k | Wiederholungsindex |
| n | Programmschrittzähler (natürliche Zahl) |

| | |
|---|---|
| T | Toleranz-Intervall |
| t | reale Zeit |
| U | Umgebung |
| O | Gesamtgeschwindigkeitswert |

**Patentansprüche**

1. Verfahren zum Überwachen einer Werkzeugmaschine (10), insbesondere einer spanenden Werkzeugmaschine (10), mit den Schritten:

   (a) Ermitteln von Prozessgrößen-Messwerten (B(i)) einer Prozessgröße (B) in Abhängigkeit von einem Parameter,
   (b) Ermitteln, ob die Prozessgrößen-Messwerte (B(i)) in einem vorgegebenen Toleranz-Intervall (T(i)) liegen, das von dem Parameter abhängt,
   (c) verneinendenfalls Ausgeben eines Warnsignals und
   (d) beständig Wiederholen der Schritte (a) bis (c),

   **gekennzeichnet durch** den Schritt:
   (e) Berechnen des Parameters als Argument der Werkzeug-Trajektorie aus der realen Zeit (t) und zumindest einem Ablaufparameter (O, $\Delta t_{still}$), der die Abarbeitungsgeschwindigkeit des Bearbeitungsprozesses charakterisiert, sodass der Parameter eine einen Fortschritt des Bearbeitungsprozesses stets charakterisierende Laufvariable (i) ist.

2. Verfahren nach Anspruch 1, **dadurch gekennzeichnet, dass** der zumindest eine Ablaufparameter (O, $\Delta t_{still}$) ein momentaner Gesamtgeschwindigkeitswert (O(t)) eines Gesamtgeschwindigkeitsreglers ist.

3. Verfahren nach Anspruch 1 oder 2, **dadurch gekennzeichnet, dass** das Berechnen der Laufvariablen (i) aus der realen Zeit (t) das Berechnen des Integrals über den momentanen Gesamtgeschwindigkeitswert (O(t)) umfasst.

4. Verfahren nach einem der vorstehenden Ansprüche, **dadurch gekennzeichnet, dass** der zumindest eine Ablaufparameter (O, $\Delta t_{still}$) eine Stillstandszeit ($\Delta t_{still}$) umfasst, die ein Stillstehen des Bearbeitungsprozesses charakterisiert.

5. Verfahren nach einem der vorstehenden Ansprüche, **dadurch gekennzeichnet, dass** der Schritt (b) des Ermittelns, ob die Prozessgrößen-Messwerte (B(i)) in dem vorgegebenen Toleranz-Intervall (T(i)) liegen, die folgenden Schritte umfasst:

   (b1) für eine Laufvariable (io), zu der ein Prozessgrößen-Messwert (B(io)) ermittelt wurde, Bestimmen einer

7

Zeit-Umgebung $U_e(i_0)$ um diese Laufvariable (io),

(b2) Ermitteln zumindest einer Referenz-Laufvariable ($i_{ref}$) aus der Zeit-Umgebung Ue ($i_0$), für die zumindest ein Referenz-Prozessgrößen-Messwert ($B_{ref}(i_{ref})$) existiert, der in einem vorhergegangenen, gleichen Bearbeitungsprozess aufgenommen wurde, und

(b3) Berechnen des Toleranz-Intervalls ($T(io)$) aus dem zumindest einen Referenz-Prozessgrößen-Messwert ($B_{ref}(i_{ref})$).

6. Verfahren nach einem der vorstehenden Ansprüche, **dadurch gekennzeichnet, dass** das Toleranz-Intervall ($T(i)$) anhand eines Maximums und eines Minimums über die Referenz-Prozessgrößen-Messwerte ($B_{ref}(i_{ref})$) berechnet wird.

7. Verfahren nach einem der vorstehenden Ansprüche, **gekennzeichnet durch** den Schritt:

   (a) Erfassen eines Endes einer Positionierbewegung und/oder eines Beginns einer Vorschubbewegung und
   (b) Setzen der Laufvariablen (i) auf einen vorgegebenen Wert.

8. Steuerung (18) für eine spanende Werkzeugmaschine (10), mit

   (a) einer Prozessgrößen-Erfassungsvorrichtung, die eingerichtet ist zum Ermitteln von Prozessgrößen-Messwerten ($B(i)$) einer Prozessgröße (B) in Abhängigkeit von einem Parameter, und
   (b) einer Recheneinheit, die einen digitalen Speicher (20) umfasst,

   **dadurch gekennzeichnet, dass**
   in dem digitalen Speicher (20) ein Programmkode abgelegt ist, der ein Verfahren nach einem der vorstehenden Ansprüche kodiert.

9. Steuerung nach Anspruch 8, **dadurch gekennzeichnet, dass** in ihr ein Kaskadenregler implementiert ist.

10. Werkzeugmaschine (10) mit einer Steuerung (20) nach Anspruch 8 oder 9.


## Claims

1. A method for monitoring a machine tool (10), in particular a material-removing machine tool (10), having the steps of:

   (a) determining process variable measured values ($B(i)$) of a process variable (B) on the basis of a parameter,
   (b) determining whether the process variable measured values ($B(i)$) lie within a predefined tolerance range ($T(i)$) which depends on the parameter,
   (c) if not, outputting a warning signal and
   (d) constantly repeating steps (a) to (c),

   **characterised by** the step:
   (e) calculating the parameter as the argument of the tool trajectory from the real time (t) and at least one process parameter (O, $\Delta t_{still}$) which characterizes the processing speed of the machining process, so that the parameter is a control variable (i) which always characterizes a progress of the machining process.

2. The method according to claim 1, **characterised by** the fact that the at least one process parameter (O, $\Delta t_{still}$) is a momentary velocity value (O(t)) of an overall velocity regulator.

3. The method according to claim 1 or 2, **characterised by** the fact that the calculation of the control variable (i) from the real time (t) comprises the calculation of the integral over the momentary overall velocity value (O(t)).

4. The method according to one of the above claims, **characterised by** the fact that the at least one process parameter (O, $\Delta t_{still}$) comprises a downtime ($\Delta t_{still}$) that characterizes a stationary point in the machining process.

5. The method according to one of the above claims, **characterised by** the fact that the step (b) of determining whether the process variable measured values ($B(i)$) lie within the predefined tolerance range ($T(i)$) includes the following steps:

(b1) for a control variable (io) at which a process variable measured value (B(io)) has been determined, determining a time neighbourhood $U_e(i_0)$ around this control variable (io),
(b2) determining at least one reference control variable ($i_{ref}$) from the time neighbourhood $U_e$ (io), for which at least one reference process variable measured value (Bref(iref)) exists which has been recorded in a previous, identical machining process, and
(b3) calculating the tolerance range (T(io)) using the at least one reference process variable measured value ($B_{ref}(i_{ref})$).

6. The method according to one of the above claims, **characterised by** the fact that the tolerance range (T(i)) is calculated using a maximum and a minimum above the reference process variable measured values ($B_{ref}(i_{ref})$).

7. The method according to one of the above claims, **characterised by** the step:

   (a) recording an end of a positioning movement and/or a start of a feed movement, and
   (b) setting the control variable (i) to a predefined value.

8. Controller (18) for a material-removing machine tool (10) with

   (a) a process variable recording device that is configured to determine process variable measured values (B(i)) of a process variable (B) based on a parameter, and
   (b) a processing unit which comprises a digital memory (20),

   **characterised by** the fact that
   a programme code is saved in the digital memory (20) that codes a method according to one of the above claims.

9. Controller according to claim 8, **characterised by** the fact that a cascade regulator is implemented within it.

10. Machine tool (10) with a controller (20) according to claim 8 or 9.


**Revendications**

1. Procédé de surveillance d'une machine-outil (10), en particulier d'une machine-outil d'usinage (10), comportant les étapes consistant à:

   (a) déterminer des valeurs mesurées (B(i)) d'une variable de processus (B) en fonction d'un paramètre,
   (b) déterminer si les valeurs mesurées (B(i)) de la variable de processus se situent dans un intervalle de tolérance prédéterminé (T(i)) qui dépend du paramètre,
   (c) si tel n'est pas le cas, émettre un signal d'avertissement, et
   (d) répéter les étapes (a) à (c) de manière continue,

   **caractérisé par** l'étape consistant à:
   (e) calculer le paramètre en tant qu'argument de la trajectoire de l'outil à partir du temps réel (t) et d'au moins un paramètre de déroulement (O, $\Delta t_{still}$) caractérisant la vitesse d'exécution du processus d'usinage, de sorte que le paramètre est une variable courante (i) qui caractérise constamment une progression du processus d'usinage.

2. Procédé selon la revendication 1, **caractérisé en ce que** ledit au moins un paramètre de déroulement (O, $\Delta t_{still}$) est une valeur de vitesse globale instantanée (O(t)) d'un régulateur de vitesse globale.

3. Procédé selon la revendication 1 ou 2, **caractérisé en ce que** le calcul de la variable courante (i) à partir du temps réel (t) comprend le calcul de l'intégrale sur la valeur de vitesse globale instantanée (O(t)).

4. Procédé selon l'une des revendications précédentes, **caractérisé en ce que** ledit au moins un paramètre de déroulement (O, $\Delta t_{still}$) comprend un temps d'arrêt ($\Delta t_{still}$) caractérisant un arrêt du processus d'usinage.

5. Procédé selon l'une des revendications précédentes, **caractérisé en ce que** l'étape (b) consistant à déterminer si les valeurs mesurées (B(i)) de la variable de processus se situent dans l'intervalle de tolérance prédéterminé (T(i)) comprend les étapes suivantes consistant à :

(b1) pour une variable courante (io) pour laquelle une valeur mesurée (B(i)) de la variable de processus a été déterminée, déterminer un environnement temporel $U_e$ ($i_0$) autour de ladite variable courante (io),

(b2) déterminer au moins une variable courante de référence ($i_{ref}$) à partir de l'environnement temporel $U_e$ ($i_0$), pour laquelle il existe au moins une valeur mesurée de référence ($B_{ref}$($i_{ref}$)) de la variable de processus, qui a été enregistrée dans un processus d'usinage précédent identique, et

(b3) calculer l'intervalle de tolérance (T($i_0$)) à partir de ladite au moins une valeur mesurée de référence ($B_{ref}$($i_{ref}$)) de la variable de processus.

6. Procédé selon l'une des revendications précédentes, **caractérisé en ce que** l'intervalle de tolérance (T(i)) est calculé en utilisant un maximum et un minimum sur les valeurs mesurées de référence ($B_{ref}$($i_{ref}$)) de la variable de processus.

7. Procédé selon l'une des revendications précédentes, **caractérisé par** l'étape consistant à:

(a) détecter la fin d'un mouvement de positionnement et/ou le début d'un mouvement d'avance, et

(b) mettre la variable courante (i) à une valeur prédéterminée.

8. Commande (18) pour une machine-outil d'usinage (10), comprenant

(a) un dispositif de détection de variables de processus qui est conçu pour déterminer des valeurs mesurées (B(i)) d'une variable de processus (B) en fonction d'un paramètre, et

(b) une unité de calcul comprenant une mémoire numérique (20),

**caractérisée en ce que**

un code de programme est stocké dans la mémoire numérique (20), lequel encode un procédé selon l'une des revendications précédentes.

9. Commande selon la revendication 8, **caractérisée en ce que** un régulateur en cascade est implémenté dans celle-ci.

10. Machine-outil (10) comprenant une commande (20) selon la revendication 8 ou 9.

Fig. 1

Fig. 2a

Fig. 2b

Fig. 3

M(i=45)

i=46
i=45
i=44

B₁(46)
B₁(45)
B₁(44)

$U_e(45)$

i=45

B₃(18)

M(i=17)

i=18
i=17
i=16

B₁(18)
B₁(17)
B₁(16)

$U_e(18)$

B

k=1
k=2
k=3
k

Fig. 4

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102009025167 B3
- DE 602005003194 T2
- EP 1455983 B1

### In der Beschreibung aufgeführte Nicht-Patentliteratur

- **VON _JASON W. OSBORNE et al.** The power of outliers (and why researchers should ALWAYS check for them). *Practical Assessment, Research & Evaluation,* Marz 2004, vol. 9 (6), ISSN 1531-7714
- **J. BRINKHAUS.** Mehr Intelligenz für Werkzeugmaschinen. *Phi Produktionstechnik Hannover informiert,* ISSN 1616-2757